# EUROPEAN PATENT SPECIFICATION

(11) **EP 4 268 598 B1**
(45) Date of publication and mention of the grant of the patent: **23.07.2025**
(21) Application number: 23167701.4
(22) Date of filing: 13.04.2023
(51) Int. Cl.: A21C 9/00, B07C 5/342, G01N 21/00

(54) **SYSTEM AND METHOD FOR SELECTING ELEMENTS BASED ON EDIBLE PASTA, PREFERABLY SHORT PASTA**
SYSTEM UND VERFAHREN ZUR AUSWAHL VON ELEMENTEN AUF DER BASIS VON ESSBAREN TEIGWAREN, VORZUGSWEISE KURZTEIGWAREN
SYSTÈME ET MÉTHODE DE SÉLECTION D'ÉLÉMENTS BASÉS SUR DES PÂTES COMESTIBLES, DE PRÉFÉRENCE DES PÂTES COURTES

(30) Priority: 27.04.2022 IT 202200008258
(43) Date of publication of application: 01.11.2023
(73) Proprietor: R A M Elettronica S.r.l., 76123 Andria (BT) (IT)
(72) Inventor: SCARCELLI, Riccardo, 76123 ANDRIA (BT) (IT)
(74) Representative: Corradini, Corrado

(56) References cited:
- EP-A1- 2 345 330
- CN-A- 113 145 494
- JP-A- 2018 202 305
- JP-A- 2018 202 370
- US-A1- 2005 099 620

## Description

The present invention relates to a system and a method for selecting elements based on edible (raw) pasta, preferably short pasta.

Nowadays, in conjunction with increasingly evolved production processes and with a high attention of the consumers to quality, the presence of aesthetic defects, even in food products such as pasta, is highly undesirable.

It is known in the state of the art, in EP2345330 a solution for the selection of elements based on pasta that allows to eliminate those pieces that present aesthetic defects.

In short, in this solution, the pasta elements are advanced aligned and juxtaposed with each other, with the main dimension perpendicular to the advancement direction; when the camera detects a defect, a further processing path is opened, through which the defective element and those immediately preceding and following, are taken from the production line to be destined for rejection.

Although functional, this solution is however dedicated to pasta that in jargon is defined "long", that is, pasta such as spaghetti, linguine, vermicelli, fettuccine and the like that can be advanced in an orderly and aligned manner along a conveyor belt.

In "long" pasta the ratio between the smaller and the larger dimension is less than 0.1.

However, this known system is not applicable to "short" pasta (e.g. pennette, fusilli etc.) because the latter would advance on a conveyor belt in a not orderly way; this implies not only a problem regarding the identification of defective elements, but above all it means that once the rejection path is activated it would eliminate a large amount of potentially non-defective elements (in particular, at least all those elements that are placed at the same section of the conveyor belt as the one with the defects would be eliminated). This known solution, therefore, is not applicable in the case of short pasta or, if applied, entails excessive waste.

Moreover, even in the case of long pasta, this known system has little flexibility: it is in fact necessary to ensure that the long pasta proceeds aligned and orderly on the conveyor belt in order to have the main dimension of each element arranged perpendicularly to the advancement direction: this constrains the design choices of the entire production line and requires to adopt measures aimed at guaranteeing this requirement.

The task of the present invention is to realize a system and a method for selecting elements based on edible pasta, preferably short pasta, which is able to improve the prior art in one or more of the aspects indicated above.

As part of this task, an aim of the invention is to make available a system and a method for selecting elements based on edible pasta that can be used in the selection of short pasta.

Another aim of the invention is to make available a system and a method for selecting elements based on edible pasta that can be used in the selection of pasta in general (long or short) without requiring the adoption of special measures in the line.

Another aim of the invention is to make available a system and a method for selecting elements based on edible pasta with high efficiency, understood as the ratio between the elements that are actually defective and those that are actually rejected.

Furthermore, the present invention aims to overcome the drawbacks of the prior art in a way alternative to any existing solutions.

Not the least aim of the invention is to realize a system and a method that is highly reliable, relatively easy to realize and at competitive costs.

This task, as well as these and other aims that will better appear later, are achieved by a system for selecting elements based on edible pasta according to claim 1, optionally provided with one or more of the features of the dependent claims and by means of a method according to claim 9, optionally provided with one or more of the features of the claims dependent thereon.

A further object of the invention is a pasta production line comprising a system 1 or realizing a method for selecting elements based on edible pasta according to the invention.

Further characteristics and advantages of the invention will more fully emerge from the description of a preferred but not exclusive embodiment of the device and of the method according to the invention, illustrated by way of non-limiting example in the appended drawings, in which:

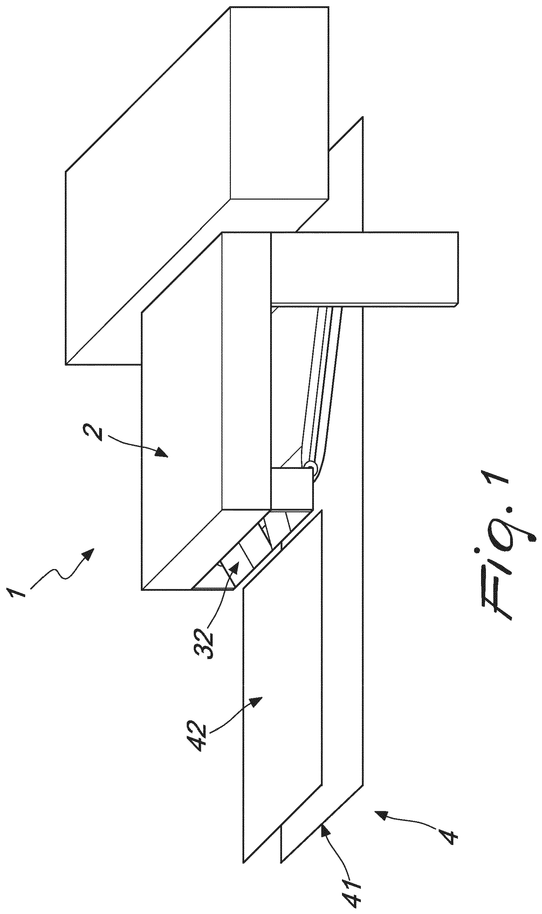

- Figure 1 illustrates a perspective view of the system according to the invention mounted in line;

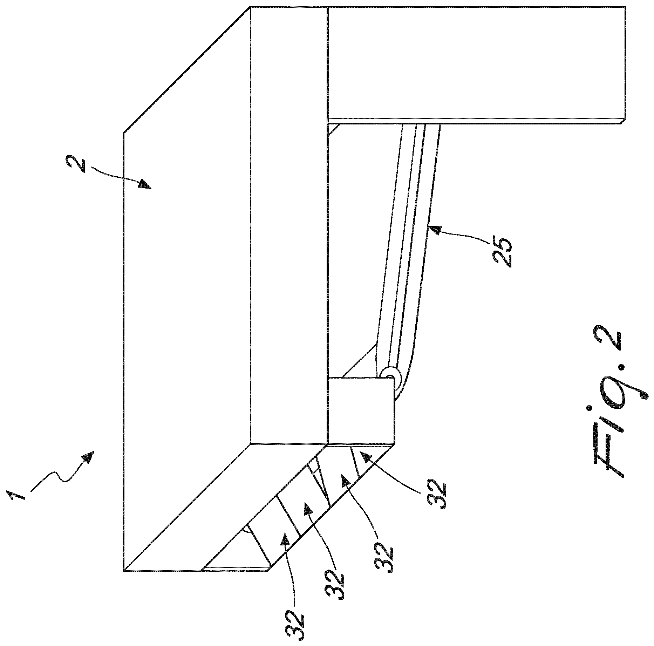

- Figure 2 illustrates a perspective view of the system according to the invention;
- Figure 3 illustrates a schematic side view of the detection part of the system according to the invention;
- Figure 4 illustrates a perspective view of a selection part of the system according to the invention;
- Figures 5 and 6 illustrate side views of a selection part of the system of the previous figures in two selection conditions.

With reference to the cited figures, the system according to the invention is globally indicated with reference number 1.

Before describing in detail the system 1, it is more evident to report the method subject-matter of the invention.

Notably, this is a method for selecting elements based on edible (raw) pasta, preferably short pasta, comprising the steps of:
a) causing pasta elements (E) to transit along an advancement direction (AV) in an inspection space (S) in which lighting means (21, 22) and an optical detection means (23) having a sight axis are active;
b) lighting, by means of said lighting means (21, 22), the pasta elements (E) in the inspection space along two different directions, at least one direction coinciding with the sight axis of the optical detection means;
c) identifying the individual pasta elements (E) in the inspection space (S) that have defects, said defects being:
   at least a first type of excessively dried pasta defect,
   a second type of incorrectly shaped pasta defect,
   a third type of stuck pasta defect;
d) associating with each pasta element that has defects a datum of transverse position with respect to the advancement direction;
e) actuating diverters (32) in order to direct alternately at least the pasta elements in which defects have been detected toward a rejection path and the pasta elements in which defects have not been found toward a further processing, on the line.

Turning now to the selection system 1, it is configured to select elements based on edible (raw) pasta, preferably short pasta.

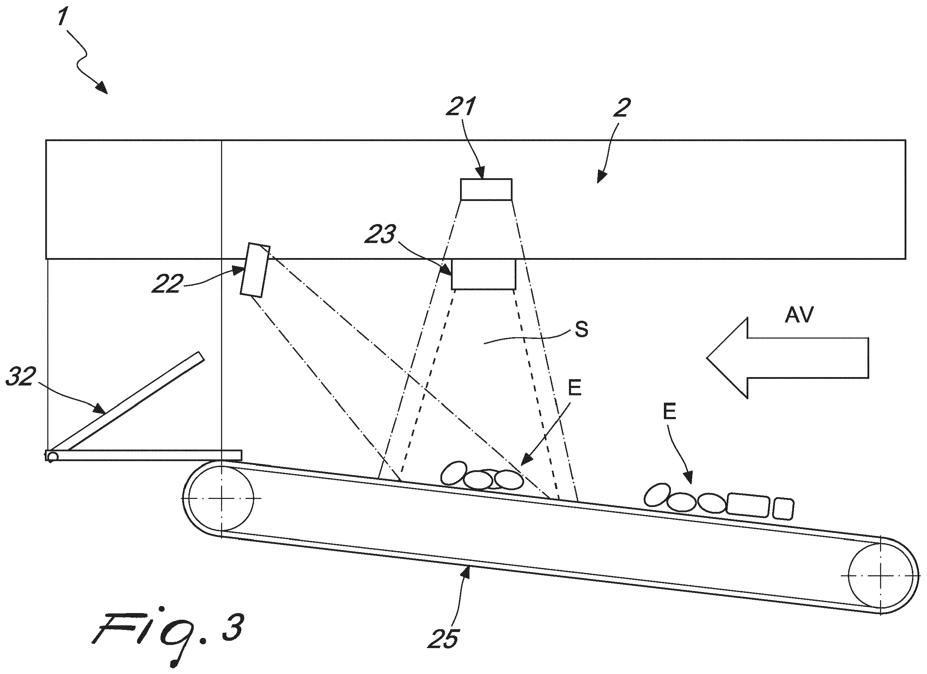

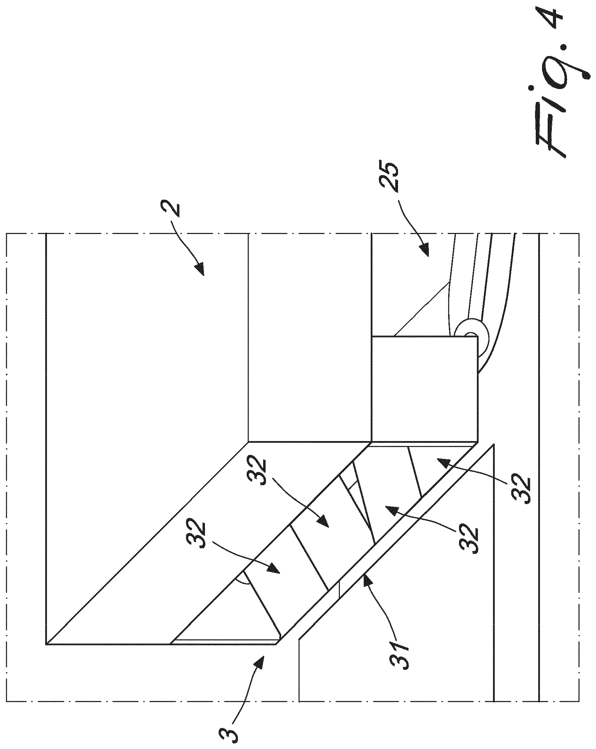

With reference to the figures, the system 1 comprises a detection part 2 (see Fig. 3 in schematic detail) and a real selection part 3 (see Fig. 4-6 in detail).

The detection part 2 of the system 1 comprises:
- lighting means 21, 22 for lighting the pasta elements E that transit in an inspection space S and
- an optical detection means 23 for acquiring images of the pasta elements E in the inspection space S; the optical detection means 23 having a sight axis (or optical axis) along which the inspection space S is located.

The pasta elements E in transit in the inspection space S are arranged in it in bulk (in a not orderly manner) with pasta elements E at least partially stacked/superimposed one another in an irregular manner (and without a precise order and variously oriented) and/or stacked so as to be very close and/or (mainly) in contact with each other.

The selection part 3 comprises a selection assembly 31 for diverting selectively the pasta elements toward further processing means 41 or toward a rejection path 42 of the line 4 on which the device 1 is inserted and functional.

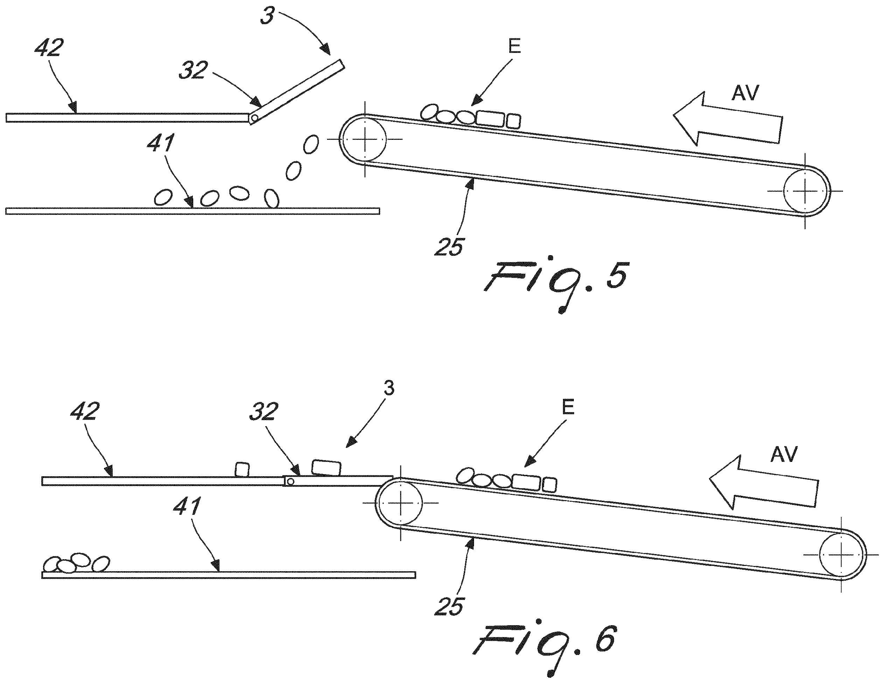

The selection assembly 31 comprises a plurality of diverters 32, each of which can move independently of the others between a transfer condition (see Fig. 5) and a rejection condition (see Fig. 6) in order to divert selectively the pasta elements E toward the further processing means or toward the rejection path.

The system 1 comprises then an electronic processing device which is functionally connected at least to the optical detection means 23 to classify each pasta element E into elements of a first type or of a second type, the elements of the first type being conforming elements assigned to the further processing and those of the second type being nonconforming elements intended for the rejection path.

The electronic processing device is furthermore functionally connected to the expulsion assembly 31 in order to control selectively the activation of the diverters 32 so as to direct the elements of the first type toward the further processing means 41 and those of the second type toward the rejection path 42.

The operation of the system as described so far is as follows: with reference also to Fig. 3, the pasta elements E advance along an advancement direction AV until they enter the inspection space S of the optical detection means 23, in which they are subject to the action of the lighting means 21, 22.

Thanks to the latter, the pasta elements are lighted and the optical detection means 23 is able to detect the existence of any defects, for example:
- too dried pasta (excessive stay in the ovens), which appears darker to the eye;
- pasta of different size;
- pasta glued piece by piece.

In particular, the electronic processing device receives, from the optical detection means 23, images of the pasta E that is transiting through the inspection space and is able, on the basis of the images, to detect the defects in the individual pasta elements and to identify in which region (with reference to a direction transverse to the advancement direction AV) the defective pasta elements are to be found, associating the presence of the defect with a transverse region (with respect to the advancement direction) of the space S.

At this point the pasta leaves the inspection space S and travels further in the advancement direction AV toward the selection part 3; the electronic processing device then controls each of the diverters 32 of the expulsion assembly 31 to bring them into a condition in which they divert the pasta E in which defects have been detected so as to direct it toward the rejection path (in this case upper one) and direct the pasta E in which no defects have been found toward a further processing, for the further processing on the line, for example they direct it toward a dosing and packaging station.

The fact that a region of the space S in which the defect is present has been associated with the presence of defective elements allows the electronic processing device to direct only those pasta elements that are in the associated region toward the rejection path, avoiding rejecting the entire amount of product that was in the inspection space S at the time the defect was detected, but limiting the waste to what is really necessary.

To this end, each of the diverters 32 is provided with a dedicated actuator (an electric motor, a hydraulic or pneumatic actuator or the like) individually controlled by the electronic processing device to perform the above-described operation.

According to the invention, the lighting means 21, 22 comprise first lighting means 21 and second lighting means 22 each adapted to light along a different direction the pasta elements E that transit in the inspection space S.

According to the invention, the first and second lighting means 21 and 22 light the pasta E in two different directions, one of these directions substantially coinciding with the optical axis of the optical detection means 23, so as to avoid shadows that could distort the reading of the latter.

As visible in the figures, each of the lighting means 21 and 22 (individually) is arranged above the inspection space S (above which the pasta elements E transit (in practice, the pasta elements E in transit are interposed between the inspection space S and each of the lighting means 21 and 22).

Each of the lighting means 21 and 22, in practice, directly lights the pasta elements E that transit through the inspection space S (without interposing other elements or intermediate screens).

According to the invention, the first lighting means 21 light the inspection space S according to an (main) axis that substantially coincides with the optical axis of the optical detection means 23, to enhance any chromatic defects, while the second lighting means 22 light the inspection space S according to an axis that is angled with respect to the axis of the first means 21, so as to enhance any shape defects.

In particular, as evident from the figures, the first lighting means 21 are arranged above the inspection space S, for example at a non-zero distance from it, so that the pasta elements E in transit above the inspection space S intersect the light beam (with axis coinciding with the optical axis of the optical detection means 23) and, therefore, are directly hit by said light beam.

Preferably, as evident from the figures, the first lighting means 21 light the inspection space S according to an (main) axis that is substantially orthogonal (with a tolerance of ± 7°) to the inspection space S on which the pasta elements E transit resting.

The first lighting means 21 are lamps emitting a directed/collimated light beam (for example LEDs), wherein the emitted light beam mainly extends on a transverse plane (full width along the advancement direction AV imposed on the pasta elements E in transit) of the inspection space S, wherein said transverse plane (containing the aforementioned axis) is substantially orthogonal to the inspection space S on which the pasta elements E transit resting.

Moreover, as evident from the figures, the second lighting means 22 are (also) arranged above the inspection space S, for example at a non-zero distance from it, so that the pasta elements E in transit above the inspection space S intersect the light beam (with axis angled with respect to the optical axis of the optical detection means 23) and, therefore, are directly hit by said light beam.

Preferably, as evident from the figures, the second lighting means 22 light the inspection space S according to an (main) axis that is substantially inclined or angled with respect to the inspection space S on which the pasta elements E transit resting, for example by an angle substantially equal to 45° ± 7° with respect to the inspection space S on which the pasta elements E transit resting (and/or to the axis of the first lighting means 21). As evident from the figures, the second lighting means 22 are configured so as to direct the light beam emitted in the rear direction (or in the opposite/discordant direction) with respect to the advancement direction imposed on the pasta elements E along their advancement direction AV.

In practice, the second lighting means are placed (above and) in front of the inspection space S and turned rearward to light the same lighting space S.

The second lighting means 22 are lamps emitting a directed/collimated light beam (for example LEDs), wherein the emitted light beam mainly extends on a transverse plane (full width along the advancement direction AV imposed on the elements E of pasta in transit) of the inspection space S, wherein said transverse plane (containing the aforementioned axis) is substantially angled (as described above) with respect to the inspection space S on which the elements E of pasta transit resting.

As visible from the figures, in practice, the first lighting means 21 and the second lighting means 22 light the same inspection space S (i.e. directly the pasta elements E in transit thereon) with different angles, as described above.

It should be understood that the system 1 just described is realized as a unit to be assembled in a pasta production line, namely downstream of a drying oven and before packaging.

As illustrated, the inspection space S is defined at an axial portion (of the upper surface on which the pasta elements E rest) of a conveyor belt 25.

In detail, the inspection space S is defined by an axial portion (for example axially contained, but substantially at full width), of the conveyor belt 25 on which the pasta elements E transit (as said above in bulk and/or at least partially stacked/superimposed and/or stacked/close/in contact with each other).

The conveyor belt 25 is a flexible belt closed on itself in a ring and, for example, is driven into rotation by a special motor, as known to the person skilled in the art.

Preferably, the conveyor belt 25 (i.e. the inspection space S defined by it) is non-transparent and/or non-translucent to the light in the visible field (emitted by the lighting means 21,22), i.e. it is able to shield said light and not be crossed by it.

Furthermore (in addition or alternatively), the conveyor belt 25 (i.e. the inspection space S defined by it) is dark in colour (for example blue or black or grey or the like), in particular it is made (or coated) with a colour that is darker than the colour (of the pasta in general and, more particularly) of the pasta elements E which it is intended to transport (so that the transported pasta elements passing through the inspection space S can be in chromatic contrast with the underlying conveyor belt 25).

In this embodiment the conveyor belt 25 carrying pasta E is one of the conveyor belts of the line itself. In an evolved variant, the system 1 instead also comprises its own conveyor belt 25 as well as, optionally, the further path 41 and the rejection path 42 for example in the form of trays or conveyor belts or the like.

The speed imposed (by the conveyor belt 25) on the pasta elements E in transit in the inspection space S is a typical advancement speed of the pasta in the (production) line 4 of the pasta itself.

Preferably, the speed imposed (by the conveyor belt 25) on the pasta elements E in transit in the inspection space S is greater than 0.7 m/s, preferably substantially equal to 0.87 m/s (i.e. substantially equal to or corresponding to the advancement speed of pasta in the line 4, i.e. in the further path 41 that leads to a pasta packaging station itself located downstream of the system 1 and/or in the production path that arrives from a drying oven located upstream of the system 1).

Still, as evident from the figures, the conveyor belt 25 is (slightly) inclined (by about 5°-10°, preferably 7°) with respect to the horizontal, preferably so as to push the pasta elements upwards along the advancement direction AV, i.e. it has an upstream end that is lower than the downstream end thereof.

Regardless of the embodiment, in a general sense, it should be noted that the diverters 32 extend substantially along a direction transverse to the advancement direction that is equal to the width (in the same direction) of the conveyor belt 25, so as to be able to intervene over the entire width of the latter; each diverter 32, therefore, extends for part of the transverse dimension of the belt 25.

Finally, the subject-matter of the invention is also the pasta production line 4 comprising a drying oven and a packaging station and that comprises a system 1 for selecting elements based on edible pasta which is arranged between said drying oven and said packaging station.

The use of the system 1 according to the invention is clear and evident from the above. Practically, it has been established that the invention achieves the intended task and objects by realizing a system for selecting elements based on edible pasta, preferably short pasta, which allows to minimize waste.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. A system (1) for selecting elements based on edible pasta, preferably short pasta, comprising a detection part (2) and a selection part (3), wherein the detection part (2) in turn comprises:
- lighting means (21, 22) for lighting pasta elements (E) that transit in an inspection space (S); and
- an optical detection means (23) for acquiring images of the pasta elements (E) in the inspection space (S);
the selection part (3) comprises:
- a selection assembly (31) for diverting selectively the pasta elements (E) toward further processing means (41) or toward a rejection path (42), wherein the selection assembly (31) comprises a plurality of diverters (32), each of which can move independently of the others between a transfer condition and a rejection condition in order to divert selectively the pasta elements (E) toward the further processing means (41) or toward the rejection path (42);
wherein said lighting means (21,22) comprise first lighting means (21) and second lighting means (22), each adapted to light along a different direction the pasta elements (E) in the inspection space (S), wherein the first and second lighting means (21,22) light the pasta (E) in two different directions:
- the first lighting means (21) light the inspection space (S) along an axis that substantially coincides with the image acquisition axis of the optical detection means (23); and
- the second lighting means (22) light the inspection space (S) along an axis that is different from the axis of the first means (21);
wherein the first and second lighting means (21,22) individually are arranged above the inspection space (S) over which the pasta elements (E) transit.

2. The system (1) according to the preceding claim, comprising an electronic processing device which is functionally connected at least to the optical detection means (23) at least to classify each pasta element (E) into elements of a first type or of a second type, the elements of the first type being conforming elements assigned to further processing (41) and those of the second type being nonconforming elements intended for the rejection path (42).

3. The system (1) according to claim 1 or 2, wherein the electronic processing device is furthermore functionally connected to the expulsion assembly (31) in order to control selectively the activation of the diverters (32) so as to direct the elements of the first type toward the further processing means (41) and those of the second type toward the rejection path (42).

4. The system (1) according to one or more of the preceding claims, comprising a dedicated actuator for each of the diverters (32), said actuator being controlled individually by the electronic processing device.

5. The system (1) according to claim 1, wherein
the second lighting means (22) light the inspection space (S) along an axis that is angled by an angle of 45° ± 7° with respect to it.

6. The system (1) according to claim 1, comprising a conveyor belt (25) on which the pasta elements (E) transit along an advancement direction (AV), the inspection space (S) being defined by at least an axial portion, preferably full width) of said conveyor belt (25).

7. The system (1) according to the preceding claim, wherein the conveyor belt (25) on which the pasta elements (E) transit has a darker colour than the colour of the pasta elements (E) that it is intended to transport.

8. The system (1) according to claim 1 or 6, wherein the advancement speed imposed on the pasta elements (E) in transit in the inspection area (S) is greater than 0.7 m/s, preferably substantially equal to 0.87m/s.

9. A method for selecting elements based on edible pasta, preferably short pasta, carried out by means of a system (1) according to one or more of claims 1 to 8, comprising the steps of:
a) causing pasta elements (E) to transit along an advancement direction (AV) in an inspection space (S) in which lighting means (21, 22) and an optical detection means (23) are active;
b) lighting, by means of said lighting means (21, 22) individually arranged above the inspection space (S) over which the pasta elements (E) transit, the pasta elements (E) in the inspection space along two mutually different directions, one first direction coinciding with the detection axis of the optical detection means, along which the inspection space (S) is located and the other second direction being different from the first direction;
c) identifying the individual pasta elements (E) in the inspection space (S) that have defects, said defects being at least
a first type of excessively dried pasta defect,
a second type of incorrectly shaped pasta defect
a third type of stuck pasta defect;
d) associating with each pasta element that has defects a datum of transverse position with respect to the advancement direction;
e) actuating diverters (32) in order to direct alternately at least the pasta elements in which defects have been detected toward a rejection path and the pasta elements in which defects have not been found toward further processing, in order to continue processing on the line.

10. The method according to the preceding claim, wherein the pasta elements (E) in transit in the inspection space (S) are arranged on it in bulk, with pasta elements (E) at least partially stacked/superimposed one another in an irregular manner and/or stacked so as to be mainly in contact with each other.

11. A line (4) for the production of pasta, comprising a drying oven and a packaging station, **characterized in that** it comprises a system (1) according to one or more of claims 1 to 8 for selecting elements based on edible pasta which is arranged between said drying oven and said packaging station.

## Patentansprüche

1. System (1) zum Auswählen von Elementen basierend auf essbaren Teigwaren, vorzugsweise Kurzteigwaren, umfassend einen Erfassungsteil (2) und einem Auswahlteil (3), wobei der Erkennungssteil (2) seinerseits Folgendes umfasst:
- Beleuchtungseinrichtungen (21, 22) zum Beleuchten von Teigwarenelementen (E), die einen Inspektionsraum (S) durchlaufen; und
- eine optische Erkennungseinrichtung (23) zum Erfassen von Bildern der Teigwarenelemente (E) in dem Inspektionsraum (S);
der Auswahlteil (3) Folgendes umfasst:
- eine Auswahlanordnung (31) zum selektiven Ablenken der Teigwarenelemente (E) zu einer Weiterverarbeitungseinrichtung (41) oder zu einem Ausstoßpfad (42), wobei die Auswahlanordnung (31) eine Vielzahl von Ablenkern (32) umfasst, wovon sich jeder unabhängig von den anderen zwischen einem Übergabezustand und einem Ausstoßzustand bewegen kann, um die Teigwarenelemente (E) selektiv zu der Weiterverarbeitungseinrichtung (41) oder zu dem Ausstoßpfad (42) abzulenken;
wobei die Beleuchtungseinrichtungen (21, 22) erste Beleuchtungseinrichtungen (21) und zweite Beleuchtungseinrichtungen (22) umfassen, die jeweils angepasst sind, um sie die Teigwarenelemente (E) in dem Inspektionsraum (S) in einer anderen Richtung zu beleuchten, wobei die ersten und die zweiten Beleuchtungseinrichtungen (21, 22) die Teigwaren (E) in zwei verschiedenen Richtungen beleuchten:
- die ersten Beleuchtungseinrichtungen (21) den Inspektionsraum (S) entlang einer Achse beleuchtet, die im Wesentlichen mit der Bilderfassungsachse der optischen Erkennungseinrichtung (23) übereinstimmt; und
- die zweiten Beleuchtungseinrichtungen (22) den Inspektionsraum (S) entlang einer Achse beleuchten, die von der Achse der ersten Einrichtungen (21) verschieden ist; wobei die ersten und die zweiten Beleuchtungseinrichtung (21, 22) einzeln über dem Inspektionsraum (S) angeordnet sind, über den die Teigwarenelemente (E) verlaufen.

2. System (1) nach dem vorherigen Anspruch, umfassend eine elektronische Verarbeitungsvorrichtung, die funktionell zumindest mit den optischen Erkennungseinrichtungen (23) verbunden ist, um jedes Teigwarenelement (E) in Elemente eines ersten Typs oder eines zweiten Typs zu klassifizieren, wobei die Elemente des ersten Typs konforme Elemente sind, die einer weiteren Verarbeitung (41) zugewiesen sind, und die Elemente des zweiten Typs nicht konforme Elemente sind, die für den Ausschusspfad (42) bestimmt sind.

3. System (1) nach Anspruch 1 oder 2, wobei die elektronische Verarbeitungsvorrichtung außerdem funktionell mit der Ausstoßeinheit (31) verbunden ist, um selektiv die Aktivierung der Ablenker (32) zu steuern, um die Elemente des ersten Typs zu den Weiterverarbeitungseinrichtungen (41) und jene des zweiten Typs zu dem Ausschusspfad (42) zu leiten.

4. System (1) nach einem oder mehreren der vorherigen Ansprüche, umfassend einen dedizierten Aktuator für jeden der Ablenker (32), wobei der Aktuator individuell von der elektronischen Verarbeitungsvorrichtung gesteuert wird.

5. System (1) nach Anspruch 1, wobei die zweiten Beleuchtungseinrichtungen (22) den Inspektionsraum (S) entlang einer Achse beleuchten die um einen Winkel von 45° ±7° dazu geneigt ist.

6. System (1) nach Anspruch 1, umfassend ein Förderband (25), auf dem die Teigwarenelemente (E) entlang einer Vorlaufrichtung (AV) verlaufen, wobei der Inspektionsraum (S) durch mindestens einen axialen Abschnitt, vorzugsweise die gesamte Breite, des Förderbands (25) definiert ist.

7. System (1) nach dem vorherigen Anspruch, wobei das Förderband (25), auf dem die Teigwarenelemente (E) verlaufen, eine dunklere Farbe aufweist als die Farbe der Teigwarenelemente (E), die es transportieren soll.

8. System (1) nach Anspruch 1 oder 6, wobei die Vorlaufgeschwindigkeit, die den Teigwarenelementen (E) beim Durchlaufen des Inspektionsbereich (S) auferlegt wird, größer als 0,7 m/s, vorzugsweise im Wesentlichen gleich wie 0,87 m/s ist.

9. Verfahren zum Auswählen von Elementen basierend auf essbaren Teigwaren, vorzugsweise Kurzteigwaren, durchgeführt mittels eines Systems (1) nach einem oder mehreren der Ansprüche 1 bis 8, umfassend die folgenden Schritte:
a) Bewirken, dass Teigwarenelemente (E) entlang einer Vorlaufrichtung (AV) in einem Inspektionsraum (S) verlaufen, in dem Beleuchtungseinrichtungen (21, 22) und eine optische Erkennungseinrichtung (23) aktiv sind;
b) Beleuchten, mittels der Beleuchtungseinrichtungen (21, 22), der Teigwarenelemente (E) in dem Inspektionsraum in zwei voneinander verschiedenen Richtungen, die individuell über dem Inspektionsraum (S) angeordnet sind, über den die Teigwarenelemente (E) verlaufen, wobei eine erste Richtung, mit der Erkennungsachse der optischen Erkennungseinrichtung zusammenfällt, entlang derer sich der Inspektionsraum (S) befindet, und die andere zweite Richtung von der ersten Richtung verschieden ist;
c) Identifizieren der einzelnen Teigwarenelemente (E) in dem Inspektionsraum (S), die Defekte aufweisen, wobei diese Defekte mindestens wie folgt sind
einen ersten Defekttyp von übermäßig getrockneten Teigwaren,
einen zweiten Defekttyp von fehlerhaft geformten Teigwaren,
einen dritten Defekttyp von festsitzenden Teigwaren;
d) Assoziieren, mit jedem Teigwarenelement, das Defekte aufweist, eines Bezugspunkts für Querposition in Bezug auf die Vorlaufrichtung;
e) Betätigen von Ablenkern (32), um abwechselnd zumindest die Teigwarenelemente, in denen Defekte erkannt worden sind, zu einem Ausschusspfad und die Teigwarenelemente, bei denen keine Defekte erkannt worden sind, zur Weiterverarbeitung zu leiten, um eine Verarbeitung auf der Linie fortzusetzen.

10. Verfahren nach dem vorherigen Anspruch, wobei die Teigwarenelemente (E), die den Inspektionsraum (S) durchlaufen, in loser Schüttung darauf angeordnet sind, wobei die Teigwarenelemente (E) zumindest teilweise in unregelmäßiger Weise aufeinander gestapelt/übereinandergelegt und/oder so gestapelt sind, dass sie hauptsächlich miteinander in Kontakt sind.

11. Linie (4) zur Herstellung von Teigwaren, umfassend eine Trockenofen und eine Verpackungsstation, **dadurch gekennzeichnet, dass** sie ein System (1) nach einem oder mehreren der Ansprüche 1 bis 8 zum Auswählen von Elementen basierend auf essbaren Teigwaren umfasst, das zwischen dem Trockenofen und der Verpackungsstation angeordnet ist.

## Revendications

1. Système (1) de sélection des éléments sur la base de pâtes comestibles, de préférence des pâtes courtes, comprenant une partie de détection (2) et une partie de sélection (3), dans lequel la partie de détection (2) comprend à son tour :
- des moyens d'éclairage (21, 22) destinés à l'éclairage des éléments de pâtes (E) qui transitent dans un espace d'inspection (S) ; et
- des moyens de détection optiques (23) destinés à l'acquisition d'images des éléments de pâtes (E) qui se trouvent dans l'espace d'inspection (S) ;
la partie de sélection (3) comprend :
- un dispositif de sélection (31) destiné à dévier de manière sélective les éléments de pâtes (E) vers un moyen de traitement ultérieur (41) ou vers un chemin de rejet (42), dans lequel le dispositif de sélection (31) comprend une pluralité de déviateurs (32), chacun pouvant se déplacer de façon indépendante des autres entre un état de transfert et un état de rejet afin de dévier de façon sélective les éléments de pâtes (E) vers le moyen de traitement ultérieur (41) ou vers le chemin de rejet (42) ;
dans lequel lesdits moyens d'éclairage (21, 22) comprennent des premiers moyens d'éclairage (21) et des deuxièmes moyens d'éclairage (22), chacun étant adapté pour éclairer dans une direction différente les éléments de pâtes (E) dans l'espace d'inspection (S), dans lequel les premiers et deuxièmes moyens d'éclairage (21, 22) éclairent les pâtes (E) dans deux directions différentes :
- les premiers moyens d'éclairage (21) éclairent l'espace d'inspection (S) le long d'un axe qui coïncide sensiblement avec l'axe d'acquisition d'images des moyens de détection optiques (23) ; et
- les deuxièmes moyens d'éclairage (22) éclairent l'espace d'inspection (S) le long d'un axe qui est différent de l'axe des premiers moyens (21) ;
dans lequel les premiers et deuxièmes moyens d'éclairage (21, 22) sont disposés de façon individuelle au-dessus de l'espace d'inspection (S) sur lequel transitent les éléments de pâtes (E).

2. Système (1) selon la revendication précédente, comprenant un dispositif de traitement électronique connecté de manière fonctionnelle au moins au moyen de détection optique (23) au moins pour classer chaque élément de pâte (E) en éléments d'un premier type ou d'un deuxième type, les éléments du premier type étant des éléments conformes destinés à un traitement ultérieur (41) et ceux du deuxième type étant des éléments non conformes destinés au chemin de rejet (42).

3. Système (1) selon la revendication 1 ou 2, dans lequel le dispositif de traitement électronique est en outre connecté de manière fonctionnelle au dispositif d'expulsion (31) afin de commander de manière sélective l'activation des déviateurs (32) de façon à diriger les éléments du premier type vers les moyens de traitement ultérieur (41) et ceux du deuxième type vers le chemin de rejet (42).

4. Système (1) selon une ou plusieurs des revendications précédentes, comprenant un actionneur dédié pour chacun des déviateurs (32), ledit actionneur étant commandé de manière individuelle par le dispositif de traitement électronique.

5. Système (1) selon la revendication 1, dans lequel le deuxième moyen d'éclairage (22) éclaire l'espace d'inspection (S) le long d'un axe formant un angle de 45° ± 7° par rapport à celui-ci.

6. Système (1) selon la revendication 1, comprenant une bande transporteuse (25) sur laquelle les éléments de pâtes (E) transitent le long d'une direction d'avancement (AV), l'espace d'inspection (S) étant défini par au moins une partie axiale (de préférence sur toute la largeur) de ladite bande transporteuse (25).

7. Système (1) selon la revendication précédente, dans lequel la bande transporteuse (25) sur laquelle transitent les éléments de pâtes (E) a une couleur plus foncée que la couleur des éléments de pâtes (E) qu'elle est destinée à transporter.

8. Système (1) selon la revendication 1 ou 6, dans lequel la vitesse d'avancement imposée aux éléments de pâtes (E) en transit dans la zone d'inspection (S) est supérieure à 0,7 m/s, de préférence sensiblement égale à 0,87 m/s.

9. Procédé de sélection d'éléments sur la base de pâtes comestibles, de préférence des pâtes courtes, mis en œuvre au moyen d'un système (1) selon une ou plusieurs des revendications 1 à 8, comprenant les étapes suivantes :
a) amener les éléments de pâtes (E) à transiter le long d'une direction d'avancement (AV) dans un espace d'inspection (S) dans lequel des moyens d'éclairage (21, 22) et des moyens de détection optique (23) sont actifs ;
b) éclairer, au moyen desdits moyens d'éclairage (21, 22) disposés de manière individuelle au-dessus de l'espace d'inspection (S) sur lequel transitent les éléments de pâtes (E), les éléments de pâtes (E) dans l'espace d'inspection le long de deux directions mutuellement différentes, une première direction coïncidant avec l'axe de détection des moyens de détection optique, le long duquel est situé l'espace d'inspection (S), et la deuxième direction étant différente de la première direction ;
c) identifier individuellement les éléments de pâtes (E) dans l'espace d'inspection (S) qui présentent des défauts, lesdits défauts étant au moins
un premier type de défaut lié à un séchage excessif des pâtes,
un deuxième type de défaut lié à la forme incorrecte des pâtes
un troisième type de défaut lié à aux pâtes collées ;
d) associer à chaque pâte présentant des défauts une donnée de position transversale par rapport à la direction d'avancement ;
e) actionner des déviateurs (32) afin de diriger de manière alternative au moins les pâtes présentant des défauts vers un chemin de rejet et les pâtes ne présentant aucun défaut vers un traitement ultérieur, afin de poursuivre le traitement sur la ligne.

10. Procédé selon la revendication précédente, dans lequel les éléments de pâtes (E) en transit dans l'espace d'inspection (S) sont disposées en vrac sur celui-ci, les éléments de pâtes (E) étant au moins en partie empilées/superposées les unes sur les autres de manière irrégulière et/ou empilées de manière à être principalement en contact les unes avec les autres.

11. Ligne (4) de production de pâtes alimentaires, comprenant un four de séchage et une station d'emballage, **caractérisée en ce qu'**elle comprend un système (1) selon une ou plusieurs des revendications 1 à 8 permettant de sélectionner des éléments sur la base de pâtes comestibles qui est disposé entre ledit four de séchage et ladite station d'emballage.
